# EUROPEAN PATENT APPLICATION

(11) **EP 1 179 573 A2**
(43) Date of publication of application: **13.02.2002**
(21) Application number: 01119079.0
(22) Date of filing: 07.08.2001
(51) Int. Cl.: C09D 17/00

(54) **DYE comprising powdered pigments and mineral extenders**

(30) Priority: 08.08.2000 IT AN000033
(71) Applicant: Mosca, Roberto, 60022 Castelfidardo (Ancona) (IT)
(72) Inventor: Mosca, Roberto, 60022 Castelfidardo (Ancona) (IT)
(74) Representative: Faggioni, Carlo Maria, Dr. Ing.

(57) **Abstract**

The dye consists in a mixture of powders, comprising a combination of pigments chosen from the group of natural colouring earths (ochres, umbers, reds), of the officinal dyeing alkaline-resistant and not photosensitive plants (indigo, madder, reseda, cartamo, guado), of vegetable charcoal, of some oxides with a low specific weight and of cobalt, mixed with mineral extenders (crystalline or amorphous calcium carbonates, talc, mica, kaolin, marble, lime, allum) and natural weak acids (ascorbic, tartaric, citric, boric). These natural weak acids together with carbonates create the important function of effervescence which helps disperse the dye quickly in little water before colouring white or neutral paint.

## Description

The present invention concerns a dye.

In particular, the present invention refers to a type of powdered dye agent, advantageously used in the building industry to decorate and/or mural restoration.

At present, in the field of colouring wall paints, it is known to use semi-liquid paste composed of organic-synthetic pigments, or of various metallic oxides. The other ingredients are usually water, chemical surfactants, dispersants, densifiers, emulsifying agents, solvents, defoamers, and preservatives.

These synthetic ingredients are necessary since otherwise it would not be possible to obtain an even dispersion of dye in white or neutral paints.

These conventional dyes, used by artisans in paints or shop vendors through electronic or manual colouring systems, are almost always indicated as "toxic" on labels and safety sheets.

In present day health in the workplace, it is accepted that certain ingredients of artificial dyes (whether derived from petrolchemical composition, or from heavy metals) are the result of many serious health problems, such as cancer of male genitals; skin cancer; lung cancer; sarcoma of the liver; weakening of the immune system; brain damages and problems for the nervous system; anaemia; kidney damages. Furthermore, to obtain these conventional pigments, in the processing, strong acids or acids from petroleum are used, resulting in polluting waste products which have been the cause of environmental disasters over the last ten years.

The colouring systems that use these standard pigments have been well-established in the paint and varnish sector for years and have indirectly created other technical and aesthetic problems, domination of the market and finally the loss of professionalism in the paint and decorating field.

Technically, synthetic pigments change colour over time, especially on exterior surfaces. They are also little resistant to paint mixtures made with lime or silicates.

Aesthetically, their high level of saturation of colour produce a chromatic flatness or "cardboard effect". The dyes made with conventional pigments are extraneous to tradition and hence to use these colours in historic centres is detrimental. The standardization and globalization have created a homogeneity around the world, resulting in similar facades for the buildings of Rome, Florence and Venice as those of New York, London, and Bangkok, also as the result of negligence by certain public bodies.

Moreover small paint producers, who controlled the local market for economical paints, and at the same time offering personalized services to artisans, were forced to abandon the market, since only medium and large-sized paint producers can perfect their own colouring system including spectrometer and special software.

In this scenario, the retailers soon risk to be controlled economically by their supplier or have to compete with large paint centres, full of colouring systems and sales-people who churn out dyes made with standard flat pigments, without offering consultation and technical assistance as the traditional retailer did; retailers, at the edge of the market, will rapidly disappear.

Furthermore, the painter-decorator is no longer able to mix-up colours on his own, due to the general loss of professionalism caused by such a system, and due to the fact that architects use standard colour charts with the colours made up with the new colouring systems. Painters are therefore obliged even to order their samples from the retailer. And, it is only after several appointments with the architect at the building site, with the customer and several trips to the retailer, that the painter is able to have the pails of coloured paint ready, and finally start work.

The above problems are resolved with the present invention which consists in a dye of one or more powdered pigments, one or more inert mineral extenders and one or more effervescent chemical pair.

It is preferable if the powdered pigments are chosen from the group of natural earths, officinal dyeing plants, vegetable carbon and oxides with a low specific weight; said inert mineral extenders are chosen from the group of talc, mica, kaoline, marble, lime and alum; said effervescent chemical pairs are chosen from the group of carbonates and ascorbic, tartaric, citric, boric acid and other weak acids. All the components have been chosen in an appropriate chemical combination in order to create easy mixtures.

These dyes, with a base of "effervescent earths", are cheap, help save time, do not create health problems, respect the ecosystems, and finally adhere to the traditional colours of historic centres.

The technical features of this invention according to the above aims are clearly evident in the following claims and the advantages of the same invention will be evident from the following detailed description.

The dye according to the present invention is essentially a mixture of powdered pigments, chosen from the group of natural coloured earths (ochres, umbers, rossetti), of officinal dyeing plants which are alkaline-resistant and not photosensitive (indigo, robbia, reseda, cartamo, guado), of vegetable charcoal, of some oxides with low specific weight, and of cobalt-blue, mixed with mineral extenders (crystalline or amorphous calcium carbonate, talc, mica, kaolin, marble, lime, alum) and natural weak acids (ascorbic, tartaric, citric, boric). These acids together with carbonates create the important function of effervescence which helps disperse the dye quickly in little water before colouring white or neutral paint.
This effervescent reaction develops innocuous carbonic anhydride and an inert lime composition. Without this effervescence activity, the natural earths need to be soaked in water for several hours in order to obtain an adequate and homogeneous dispersion.

The pigments that have been chosen in the present invention are natural earths because they can be dispersed in the above-mentioned mixture, as opposed to conventional oxides or organic pigments which cause the so called flooding.

All the above-mentioned ingredients have been combined and divided into doses in order to obtain base pigments appropriate to produce colour charts with a rich variety of colours.

The following examples further explain the invention; yet, they are intended as not limiting but be seen as an indication of the possible colouring mixtures.

Advantageous results are obtained with 60% or more of the weight of the natural earths and 5% or more in weight of the effervescent chemical pairs.

Example 1 (light yellow dye) :
- provenzal ochre earth for an amount between 35% and 55% of the weight;
- Siena earth for an amount between 30% and 50%;
- crystalline calcium carbonate for an amount between 5% and 15%;
- ascorbic acid for an amount between 5% and 10%;
- tartaric acid for an amount between 5% and 10%.

Example 2 (bright yellow dye) :
- provenzal ochre earth for an amount between 35% and 55% of the weight;
- german ochre earth for an amount between 20% and 40%;
- yellow titanium dioxide for an amount between 10% and 20%;
- pulverised reseda for an amount between 5% and 10%;
- alum for an amount between 3% and 5% ;
- crystalline calcium carbonate for an amount between 5% and 15%;
- ascorbic acid for an amount between 5% and 10%;
- tartaric acid for an amount between 5% and 10%.

Example 3 (light red dye) :
- Ercolano red earth for an amount between 35% and 55% of the weight;
- Pozzuoli red earth for an amount between 30% and 50%;
- crystalline calcium carbonate for an amount between 5% and 15%;
- ascorbic acid for an amount between 5% and 10%;
- tartaric acid for an amount between 5% and 10%.

Example 4 (bright red dye):
- Venetian red earth for an amount between 50% and 75% of the weight;
- pulverised madder for an amount between 5% and 30%;
- alum for an amount between 5% and 15%;
- crystalline calcium carbonate for an amount between 5% and 15%;
- ascorbic acid for an amount between 5% and 10%;
- tartaric acid for an amount between 5% and 10%.

Example 5 (brown dye) :
- Cyprus burnt umber earth for an amount between 35% and 55% of the weight;
- Siena burnt umber earth for an amount between 30% and 50%;
- crystalline calcium carbonate for an amount between 5% and 15%;
- ascorbic acid for an amount between 5% and 10%;
- tartaric acid for an amount between 5% and 10%.

Example 6 (black dye):
- Cyprus burnt umber earth for an amount between 35% and 55% of the weight;
- vine tree black for an amount between 20% and 30%;
- pulverised vegetable charcoal for an amount between 10% and 20%;
- crystalline calcium carbonate for an amount between 5% and 15%;
- ascorbic acid for an amount between 5% and 10%;
- citric acid for an amount between 5% and 10%.

Example 7 (green dye):
- Brentonico green clay for an amount between 60% and 75% of the weight;
- pulverised blue guado for an amount between 5% and 10%;
- alum for an amount between 3% and 5%;
- provenzal ochre earth for an amount between 10% and 20%;
- crystalline calcium carbonate for an amount between 5% and 15%;
- ascorbic acid for an amount between 5% and 10%;
- tartaric acid for an amount between 5% and 10%.

Example 8 (blue dye) :
- cobalt oxide for an amount between 60% and 75% of the weight;
- talc for an amount between 5% and 20%;
- crystalline calcium carbonate for an amount between 5% and 15%;
- ascorbic acid for an amount between 5% and 10%;
- boric acid for an amount between 5% and 10%.

Pigments used in the present invention are economical colourings that colour effectively compared to oxides and aboveall, compared to pigments derived from petrolchemicals, so as a result, it is easy to dose these earth-based mixtures. In fact, in order to obtain a pastel colour in the colouring of a litre of white paint, at least a significant 5 to 10gr of powder needs to be added.

While on the contrary, in order to obtain the same colour with oxides, a couple of gr is necessary, and a fraction of a gr for organic-synthetic pigments, hence, amounts difficult to measure without precise electronic scales. Instead, the painter needs easily handable quantities that can be used for colouring either a bucket of white paint or samples of one or half litres for the architect, or for obtaining pastel, medium or bright colours.

For measuring use can be made of hard plastic cups with a handle and with a levelling device, also made of plastic, attached to the handle with a rotating pin. The measuring cups should have a hollowed bottom that allows the powder to empty out completely without friction caused by an angled bottom. The cups should be made in the shape of a quite high cylinder with a small diameter which allows for precise dosage. The above-mentioned system of measuring cups is infallible and any statistical error of the tests carried out, is minimal.

Another method pre-dose these effervescent earth based dyes by using small plastic envelopes or an even more effective way is in tablet form. But the production and packaging costs for effervescent tablets would be more expensive than the other methods. In addition, a higher percentage of effervescent combinations in the colouring mixture is necessary. Furthermore, in the compression of tablets, it is necessary to add emulsifying tensioactives (synthetic or natural e.g. lecithin), especially, if there are oxides or other artificial pigments present in the tablet mixture.

When using "effervescent earths" in a colouring system, a minimum dosage to colour one litre of white paint (sample) would be used in order to obtain a light pastel colour. This amount unit would be multiplied according to the litres contained in larger packages.

### EXAMPLES:

- pastel yellow for 1 litre = 1 dose of light yellow dye matter of 5cc.
- pastel yellow for 5 litres = 1 dose of yellow dye matter of 25cc.
- pastel yellow for 15 litres = 1 dose of yellow dye matter of 75cc.
- medium yellow for 1 litre = 3 doses of yellow dye matter of 5 cc.
- medium yellow for 5 litres = 1 dose of yellow dye matter of 75cc.
- medium yellow for 15 litres = 3 doses of yellow dye matter of 75cc.
- medium violet for 1 litre = 2 doses of yellow dye matter of 5cc.
   + 2 doses of light red dye matter of 5cc.
- bright salmon for 5 litres = 2 doses of intense red dye matter of 75 cc.
   + 1 dose of yellow dye matter of 75cc.

It is possible to create a rich colour chart with hundreds of colours with the innumerable combinations of the base dyes.

The advantages of this colouring system with "effervescent earths" are summarized in the following points:
saves time for the painter who avoids the extra work with preparation of samples by the paint producers and the many appointments with the customer and architect;
to reacquire professionalism of the painter who may mix his colours on his own and of the architect who is no longer obliged to use pigments that are not appropriate, for example in accordance with the restoration of historic buildings);
quality (the colouring earths never change colour as opposed to artificial pigments that discolour over time);
protection of historic architecture (easy recreation of traditional colours that have been used for centuries);
small paint producers may sell these economical "effervescent powdered" dyes without investing vast amounts of money for implementing electronic colouring systems. Furthermore, the retailer will not be forced to spend large amounts annually in order to work with the electronic colouring system which is "hired out".
environmentally friendly (the entire production cycle of these totally biodegradable colourings does not create problems to the ecosystem);
do not create health problems to the users of these harmless pigments.

With regards to the production costs, it is to be noted that costs of production of these colourings are pretty the same as the conventional colourings that are presently on the market. In fact, the lesser colouring power of the "effervescent earths" and hence the more quantities required, are counterbalanced by the higher cost of the conventional and artificial pigments.

The "effervescent powdered" colourings can be used for conventional hydropaints such as distemper hydrophobic traspirants, washable, crystal quartz paints, silicates, silicone, silossanic; i.e. in all the conventional acrylic or vinylic resin based mixtures. The same colourings can also be used for lime products (paints, plasters, venetian stuccos, marble effects) and finally, also for natural paints and varnishes, both watery and oily mixtures made with organic binders (milk, casein, albumen, egg yolk, starch, beeswax, linseed oil, tung oil, aleurites oil, colophony, dammar gum, tragacanth gum and other vegetable resins).

The above given object is susceptible to numerous changes and variations which are all included within the scope of the present invention.

## Claims

1. Dye **characterized in that** it comprises one or more powdered pigments, one or more inert mineral extenders and one or more effervescent chemical pairs.

2. Dye as in claim 1, **characterized in that** said powdered pigments, alone or mixed, are chosen from the group of natural earths, officinal dyeing plants, vegetable charcoal and oxides with a low specific weight.

3. Dye as in claim 1 or 2, **characterized in that** said inert mineral extenders, alone or mixed, are chosen from the group of talc, mica, kaolin, marble, lime and allum.

4. Dye as in any one of the preceding claims, **characterized in that** said effervescent chemical pairs are chosen from the group of carbonates, ascorbic acid, tartaric acid, citric acid, boric acid and other weak acids.

5. Dye as in any one of the preceding claims, **characterized in that** it further comprises natural earths for an amount over 60% of the weight, effervescent chemical pair composed of calcium carbonate and weak acid for an amount over 5% of the weight.

6. Dye as in any one of the preceding claims, **characterized in that** in form of ready-made tablets.

7. Dye as in any one of claims 1 to 5 **characterized in that** pre-dosed in quantities to use in a colouring system.
